(19) **Europäisches Patentamt / European Patent Office / Office européen des brevets**

(11) **EP 3 124 814 B1**

(12) **EUROPEAN PATENT SPECIFICATION**

(45) Date of publication and mention
of the grant of the patent:
**15.08.2018 Bulletin 2018/33**

(21) Application number: **16177177.9**

(22) Date of filing: **30.06.2016**

(51) Int Cl.:
*F16D 13/62* (2006.01)    *F16D 65/12* (2006.01)
*C04B 35/573* (2006.01)    *C04B 35/626* (2006.01)
*C04B 35/628* (2006.01)    *C04B 35/80* (2006.01)
*F16D 69/02* (2006.01)

(54) **CERAMIC MATERIAL FOR BRAKE DISCS**

KERAMISCHES MATERIAL FÜR BREMSSCHEIBEN

MATÉRIAU CÉRAMIQUE POUR DISQUES DE FREIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2015 DE 102015214712**

(43) Date of publication of application:
**01.02.2017 Bulletin 2017/05**

(73) Proprietor: **Brembo SGL Carbon Ceramic Brakes
GmbH
86405 Meitingen (DE)**

(72) Inventors:
• **KIENZLE, Andreas
86405 Meitingen (DE)**
• **KRÄTSCHMER, Ingrid
86405 Meitingen (DE)**
• **ÖTTINGER, Oswin
86405 Meitingen (DE)**
• **ORLANDI, Marco
20831 Seregno (MB) (IT)**
• **CARNEVALI, Guido
20010 San Giorgio Su Legnano (MI) (IT)**

(56) References cited:
**US-A1- 2004 097 360     US-A1- 2015 158 772
US-B1- 6 261 981**

• **DATABASE WPI Week 200231 Thomson
Scientific, London, GB; AN 2002-260767
XP002764702, -& JP 2001 199767 A (NIPPON
CARBON CO LTD) 24 July 2001 (2001-07-24)**

**Description**

The present invention relates to a ceramic component formed from a ceramic material and a process for the manufacture of the ceramic component.

Ceramics are known to be a suitable material for brake discs. The advantages of this material in the application for brake discs are, for example, a significantly lower weight than brake discs of metal, a very long lifetime and a very good friction coefficient.

Many different forms of and methods for the manufacture of ceramic brake discs are known. Generally, these components are manufactured by mixing solid particles, like short carbon fiber bundles, silicon carbide particles, together with a liquid binder, including a melt. The binder is subsequently hardened to obtain a green body and the green body is subjected to carbonization. The carbonized green body is finally infiltrated with a melt of carbide forming metal, like liquid silicon. In this last step a conversion from carbon to a ceramic material, like SiC takes place.

The materials and the respective processes have been developed in last couple of years by, for example varying the kind and amount of the solid particles used. However, the above described general process steps which are expensive and time consuming are still necessary. JP 2001 199767 A describes a low cost method for manufacturing high density SiC molding for semi conductor manufacture. Said method involves reaction infiltrating expanded graphite sheets with molten Si in a mould. No liquid binder is involved, but reinforcing fibers are excluded.

US 6 261 981 B1 describes SiC bodies obtained by reaction melt infiltration with Si of a shaped carbonaceous green body, used in brake systems. The method involves a liquid binder and a pyrolysis step, and no expandable graphite. The object of the present invention, therefore, is to provide a new ceramic material which is suitable for the manufacture of brake discs which is obtainable by a more cost efficient process than those of the prior art.

The object has been solved by the present invention which relates to a process for the manufacture of a ceramic component according to claim 1. The inventive effect is that using a liquid binder is not necessary anymore. Therefore, the steps of hardening the binder and carbonizing the green body can be omitted completely. Thus, the process of the present invention neither comprises a step of hardening a binder nor a step of carbonizing the green body of the ceramic component. A carbonization step is usually necessary, when carbonizable binders, like polymers based on phenolic resin, are used. Carbonization is the transformation of a substance into carbon by the influence of heat under a non-oxidizing atmosphere. Usually carbonization occurs at about 900°C. For the avoidance of doubt, the provision that no step of carbonizing the green body of the ceramic component is comprised by the process of the present invention does not mean that conditions which would be suitable for carbonization are excluded from the process. In step e) of the present invention, if the melt infiltration is conducted, for example, with liquid silicon, the green body would be heated to the melting temperature of silicon under non-oxidizing atmosphere. These conditions are of course similar to carbonization conditions. Therefore, the requirement that no step of carbonizing the green body of the ceramic component is comprised by the process of the present invention is to be understood that there is no binder in the mixture of step b) which has to be carbonized, i.e. transformed into carbon.

According to the present invention expanded graphite works in principle as a solid binder. Since expanded graphite consists entirely of carbon (besides small amounts of impurity, of course), the carbonization step is not necessary. Expanded graphite itself is known to the person skilled in the art for many years and is used, for example, for the manufacture of graphite foils. It is made from natural graphite which in comparison to synthetic graphite has a very regular structure, i.e. domains of the ideal graphite layer structure are relatively large. Thus, as a preferred embodiment of the present invention there is no additional binder besides the expanded graphite present in the mixture of step b).

Usually, expanded graphite is obtained by comminuting natural graphite and treating the graphite particles with concentrated sulfuric acid. The acid intercalates between the graphitic layers of the graphite particles. When the temperature is then increased until the acid evaporates, the graphite layers are pressed apart from the escaping acid vapor. This leads to an extreme increase of the volume of the graphite particles and, therefore, from this moment on the material is called expanded graphite. The bulk density of expanded graphite thus obtained usually varies between 0.006 and 0.01 g/cm$^3$ (see M. Inagaki et al, Advanced Materials Science and Engineering of Carbon, Elsevier, 2014, pages 314-315) and in some cases can go down to 0.002 g/cm$^3$.

According to the present invention the kind of expanded graphite used is not specifically limited. For example, predensified expanded graphite can also be used. The term predensified expanded graphite is to be understood as expanded graphite which has been densified to a certain density. Predensified expanded graphite is commercially available, for example, under the trade name Conductograph®. Preferably, predensified expanded graphite having a bulk density between 0.1 g/cm$^3$ and 0.8 g/cm$^3$ is comprised by the expanded graphite provided in step a). The bulk density is measured according to DIN ISO 697 (a 500ml measuring metal cylinder is filled with the particles and the weight is measured. The density is then calculated by weight/volume). Additionally preferably, the predensified expanded graphite is present in an amount between 20% and 100%, more preferably between 30% and 60% of the overall weight of expanded graphite provided in step a). The advantage of using predensified expanded graphite is that the composition in step a) can be mixed more homogenously in step b).

Explicitly not preferred is graphite foil or chopped graphite foil as the expanded graphite used in the process of the present invention as, for example, disclosed in DE10242566. As described above, graphite foil is obtained by pressing expanded graphite with press rollers to a foil. The expanded graphite is compacted in the foil to a bulk density of 0.8 to 1.4 g/cm$^3$ (see M. Inagaki et al., Materials Science and Engineering of Carbon: Fundamentals, Second Edition, Elsevier, 2014, pages 280-281). With this high degree of compaction, the graphite foil particles (obtained by chopping graphite foil) do not have anymore the ability of enclosing the other ingredients of the mixture of step b), like expanded graphite does. Although a powder of graphite foil particles may have a bulk density in the range of the bulk density of the above described and preferred predensified expanded graphite, a powder of graphite foil particles is not preferred, since the individual particles are compacted too much. Therefore, with regard to the binding properties of the expanded graphite it is preferred that the expanded graphite employed is not predensified, that is, has a bulk density in the range of 0.002 to 0.01 g/cm$^3$.

It is also possible according to the present invention that a precursor of expanded graphite can be used in step a) of the process. Sticking on the above example for the manufacture of expanded graphite, the respective precursor is natural graphite intercalated with sulfuric acid. If a precursor is used, the inventive process must comprise the step c1) in order to finally "expand" the graphite by the given temperatures in step c1). Using a precursor of expanded graphite the mixing behavior of the mixture can be improved because the precursor of expanded graphite has a higher density of expanded graphite.

During the mixing step b) the other ingredients are enclosed by the expanded graphite and the mixture is densified in a mold (step c). As in the manufacture of graphite foils, expanded graphite can be formed to integer components by applying pressure. Therefore, a compact green body is obtained after step c). If a precursor of expanded graphite is used, the mentioned enclosing of the other ingredients occurs, of course, after or during step c1), because is this case, expanded graphite is not yet present before step c1). When the precursor expands in the mold step c1), the resulting expanded graphite exhibits its binding property.
The mixing step is also of particular importance, since the particles of expanded graphite which can also be described as fluffy flakes are generally hard to handle because of the fluffiness. During the mixing and the mechanical stress caused therewith the particles of the expanded graphite get compacted to a certain degree which makes the further handling in the process easier.
The mixing step b) and the densification step c) can be critical for the following reason. Depending on the further ingredients besides expanded graphite and the precursor of expanded graphite are present in the mixture, it can happen that the densified green body expands again after release of the densification pressure. This phenomenon is called "spring back". Spring back can occur if bendable ingredients are present in the mixture, like for example consolidated carbon fiber bundles which are described further below. A stick-like particle, for example, can be bendable in a direction perpendicular to its length. If this occurs during pressing in the densification step c) the bending tension of the stick or of a plurality of the sticks can be high enough to expand the green body again which is certainly deteriorating the mechanical properties of the final material. In order to lower or avoid the effect of spring back it is helpful that measures are taken that bendable particles are oriented in the mold in a way that the bending is lower. For example, a stick-like particle is preferably oriented in the plane of the mold, if the direction of the applied pressure in the densification step is perpendicular to said plane. Carbon fibers and consolidated carbon fiber bundles enhance the stability of the ceramic component. Carbon fibers are preferably present in the form of chopped carbon fiber bundles, since these can be mixed well together with the other ingredients. Consolidated carbon fiber bundles are preferably in the form of chopped bundles as well. However, the consolidation of the bundles ensures that the carbon fibers are not separated from each other in the mixing step. As a result most of the carbon of the carbon fibers in the middle of the bundles will not be transformed into a ceramic material in step e), because the melt does not fully infiltrate the consolidated bundle. This, finally, has the advantage that the ceramic component is more stable with regard to mechanical stress, since ceramic fibers are more brittle then carbon fibers.

According to a preferred embodiment of the present invention the composition in step b) further comprises one or more materials of the group consisting of silicon carbide particles, coke and lubricants.

Silicon carbide particles and coke enhance the stability of the ceramic component, as well. The particle size of these ingredients is not particularly limited. It can range from a few micrometers to millimeters. Typically, both are present in powder form. With regard to coke, the preferred kind of coke has onion-like structure of amorphous carbon layers. It consists of essentially round particles having a d90 value of 200 μm. This coke has suitable melt infiltration properties and, therefore, leads to very stable ceramic components.

Lubricants may be advantageous to support the densification step c). A preferred lubricant is paraffin.

Preferably, consolidated carbon fiber bundles are present in the composition in step b) having a defined length and width. Such bundles are widely known in the art and the kind and method of manufacture of these bundles are not specifically limited. More preferably, the length of the consolidated carbon fiber bundles is in the range 2 mm to 2 cm and the width is between 0.5 mm to 3 mm. Within these ranges the mixing step b) leads to more homogeneous mixtures and the mixture can be evenly filled in the mold.

Furthermore, in the consolidated carbon fiber bundles, carbon fibers are embedded in a matrix of amorphous carbon. The carbon matrix to a certain extend prevents the carbon fibers from being transformed into a ceramic material in step e). Additionally preferred is that before the consolidated carbon fiber bundles are used in the process the bundles are subjected to a treatment comprising impregnating the consolidated carbon fiber bundles with pitch or phenolic resin and subsequently carbonizing the impregnated consolidated carbon fiber bundles. As a result of this treatment, the carbon matrix between the fibers obtains a higher density than before. This treatment can be repeated several times until the density of the matrix is high enough for the carbon fibers to be protected against the transformation to a ceramic material in the presence of the reactive melt in step e).

According to a preferred embodiment of the present invention the weight ratio between the expanded graphite and the consolidated carbon fiber bundles in the mixture obtained in step b) is between 0.4:1 and 1.5:1. In the context of this embodiment, it is not necessary to distinguish between expanded graphite and the precursor of expanded graphite. Therefore, the term "expanded graphite" in this context also includes the respective precursor, if used. If the amount of consolidated carbon fiber bundles is too high with regard to the expanded graphite, then the binding properties of the expanded graphite may be too low in order to obtain an integer green body. If the amount of consolidated carbon fiber bundles is, however, too low, the stability of the ceramic component decreases.

According to a more preferred embodiment of the present invention the mixture obtained in step b) contains 15-60 weight-% of expanded graphite, 10-50 weight-% of consolidated carbon fiber bundles, 0-45 weight-% of silicon carbide particles and 0-15 weight-% of additives comprising lubricants, release agents or mixtures thereof in relation to the total weight of the mixture. The term "expanded graphite" also in this context includes the respective precursor, if used. The compositions according to this preferred embodiment are advantageous in terms of processing and lead to ceramic components of high stability and high thermal conductivity. Even more preferred is an amount of expanded graphite in the mixture of 20-40 weight-%, an amount of the consolidated carbon fiber bundles of 20-40 weight-%, an amount of carbon fibers of 1-20 weight-%, an amount of coke of 0-20 weight-%, an amount of silicon carbide particles of 0-15 weight-% and an amount of additives comprising lubricants, release agents or mixtures thereof of 0-5 weight-% in relation to the total weight of the mixture.

According to a preferred embodiment of the present invention, the mixture in step c) is densified to more than 35% of the theoretical maximum density of the mixture, preferably to more than 45% of the theoretical maximum density of the mixture. Practically, the nearer the density of the green body approaches the theoretical maximum density of the mixture, the better the mechanical properties of the ceramic component are. However, an upper limit of the density of about 80 % of the theoretical maximum density is preferred, because the green body must still be suitable for melt infiltration.

Theoretical maximum density means, in contrast to bulk density, the density of a pure material without porosity, for example, the theoretical maximum density of a powder can be measured by a pycnometer. The person skilled in the art knows how to obtain the theoretical maximum density of one single component. The theoretical maximum density of a mixture (A+B) can be calculated from each single component by the following formular:

$$(m(A) + m(B)) \, / \, (theor. \; Vol. \, (A) + theor. \; Vol. \, (B)) = Theoretical \; density \; of \; the \; mixture$$

Wherein "m(A)" is the a mass of component A and "theor. Vol. (A)" is the theoretical volume of component A. The theoretical volume of component A can also be easily calculated by the following formula:

$$theor. \; Vol. \, (A) = m(A) \, / \, theoretical \; density \, (A)$$

During the densification in step c) a pressure of at least 3 MPa, preferably at least 5 MPa is applied on the mixture. Generally there is no upper limit of the pressure, because this depends on the kind and amount of each ingredient present in the mixture. Typically, presses are used with a maximum pressure about 1000 or 2000 MPa.

According to a preferred embodiment of the present invention the mixture in step c) is densified to the extent that the ceramic component after step e) has a density of 2.2 - 2.9 g/cm$^3$. If the density is too high, the ceramic material can get too brittle and, therefore, has a low ductility. For applications wherein the material is used as a rotating friction material (brake discs, clutches) this brittleness is not favorable. If the density is too low, the thermal conductivity may not be high enough in order to remove the produced frictional heat from the friction surface of the ceramic material. The reactive melt in step e) comprises liquid silicon. Silicon reacts nearly quantitative with carbon to SiC which has very good thermal and wear resistance properties. It is also possible to use alloys of silicon, like Si/Al, Si/Fe, Si/Ti.

According to a preferred embodiment of the inventive process, step e) is performed while the mixture is still in the mold. This prevents spring back. The mold in this embodiment is of a material which withstands the conditions of melt infiltration. Preferably, the form is coated on the inside with boron nitride or another material having low adhesion to the respective reactive melt. The melt infiltration according to this embodiment can, for example, be achieved by wicks being incorporated in the form. The form is contacted with a melt, for example, of silicon and the silicon is guided through the wicks to the inside of the mold and finally infiltrates the green body. Another possibility is that the respective solid carbide forming element or alloy is already present in the form or even already in the mixture in the required amount so that the form just needs to be heated up to the respective temperature for the melt infiltration. If a precursor of expanded graphite is used, then step c1) can be performed in situ together with the melt infiltration step e). That is, the mixture in the form is heated up and at a certain temperature the precursor of expanded graphite expands and binds together the other ingredients. Then, intermediately, the green body exists until the temperature reaches the melting point of the carbide forming element and the green body is infiltrated with the reactive melt.

According to a preferred embodiment of the present invention the ceramic component is a brake disc ring, a brake pad or a clutch. It has been found that the ceramic component produced by the inventive process has good mechanical and thermal properties suitable for frictional applications, preferably for ceramic brake disc rings. Also described is a green body for a ceramic component comprising 15-60 weight-% of expanded graphite, 10-50 weight-% of consolidated carbon fiber bundles, 0-45 weight-% of silicon carbide particles and 0-15 weight-% of additives comprising lubricants, release agents or mixtures thereof in relation to the total weight of the green body. The green body may be produced by process of the present invention.

More preferably, said green body comprises 20-40 weight-% of expanded graphite, 20-40 weight-% of consolidated carbon fiber bundles, 1-20 weight-% of carbon fibers 0-20 weight-% of coke, 0-15 weight-% of silicon carbide particles and 0-5 weight-% of additives comprising lubricants, release agents or mixtures thereof in relation to the total weight of the green body.

According to another aspect the present invention relates to a ceramic component obtainable by the process of the present invention. Preferably, the ceramic component is a brake disc ring.

With the process of the present invention it is possible to obtain carbon fiber reinforced ceramic components having a higher thermal conductivity than that of known comparable materials. At least for known carbon fiber reinforced ceramic brake discs the thermal conductivity at 400°C is about 25 W/Km. As can be seen in the example further below, significantly higher values can be reached by the inventive ceramic components. Therefore, according to another aspect the present invention relates to a ceramic component having a thermal conductivity at 400°C in the range of 30 - 70 W/mK, preferably 40-70 W/mK.

Besides the physical properties the ceramic component of the present invention being manufactured by the process of the present invention can be distinguished from known ceramic components by its microstructure. In microscopic pictures of a cross section of the material one can identify a layered structure which origins from the graphite layers in expanded graphite. Defining this physical structure with precise quantitative structural features, however, is not possible, since the structure varies depending on the specific kinds and amount of starting materials and the specific process conditions in the mixing step or densification step. However, as stated above the inventive ceramic can be identified easily by regarding the microstructure. Therefore, the ceramic component according to the present invention has a microstructure, wherein domains of silicon carbide are present in the component which are analogue to the layer structure of densified expanded graphite. The features of the process of the present invention generally can be combined with those defining the ceramic component, as far as there are no evident technical reasons to the contrary.

Since the material of the ceramic component of the present invention is highly suitable for brake discs, the present invention in still another aspect relates to a brake disc ring comprising the ceramic component of the present invention.

Finally, the present invention also relates to the use of the ceramic component of the present invention for brake discs, brake pads and clutches.

Example

For the production of a suitable ceramic component according to the present invention the following ingredients have been provided:

|  | Theoretical maximum density | weight (g) | weight-% | Theoretical Volume (ccm) | Theoretical Volume % |
|---|---|---|---|---|---|
| Expanded graphite | 2.20 | 19 | 22.1% | 9 | 19.6% |
| Milled graphite | 2.20 | 12 | 14.0% | 5 | 12.4% |
| Chopped Carbon Fibre (6mm) | 1.70 | 10 | 11.6% | 5.9 | 13.3% |

(continued)

|  | Theoretical maximum density | weight (g) | weight-% | Theoretical Volume (ccm) | Theoretical Volume % |
|---|---|---|---|---|---|
| Coke | 1.90 | 15 | 17.4% | 7.9 | 17.9% |
| Consolidated carbon fiber bundle with carbon matrix | 1.85 | 30 | 34.9% | 16.2 | 36.8% |
| total |  | 86 | 100% | 44.1 | 100.0% |

Milled graphite is a form of predensified expanded graphite. Because of the mechanical stress cause in a mill, the particles of the expanded graphite are densified to a certain amount. As the coke, particles having onion-like structure of amorphous carbon layers have been used.

With the given theoretical maximum density of each ingredient the theoretical maximum density of the mixture is 1.95 g/cm$^3$.

The absolute amounts of the ingredients given in the above table refer to one portion of mixture. In order to have more material for producing a sample a plurality of portions of identical mixtures has been combined and about 500 g of the ingredients were mixed in an Eirich mixer at 1000 rpm for 15 minutes. The mixture was then poured into a press mold and pressed with 3.4 MPa for 1 minute.

The resulting green body had a weight of 447 g and a bulk volume of 465 cm$^3$. Thus, the density of the green body (0.96 g/cm$^3$) was about 49% of the theoretical maximum density of the mixture which is very high.

The green body was subsequently siliconized at 1570 °C and a ceramic component has been obtained having a density of 2.67 g/cm$^3$. The material exhibited a thermal conductivity at 400°C of 57.18 W/Km which is a very good value for the applications in brake discs.

**Claims**

1. A process for the manufacture of a ceramic component comprising the following steps:

    a) providing expanded graphite and/or a precursor of expanded graphite,
    b) mixing of a composition comprising the material provided in step a) and one or more materials of the group consisting of carbon fibers and consolidated carbon fiber bundles wherein in the latter, the carbon fibers are embedded in a matrix of amorphous carbon and obtaining a mixture, wherein the composition does not comprise a liquid binder,
    c) densifying a defined amount of the mixture obtained in step b) in a mold by applying a pressure of at least 3 MPa and,
    c1) if a precursor of expanded graphite is provided in step a), heating up the densified mixture in the mold to at least 300°C,
    d) obtaining a green body of the ceramic component and
    e) subjecting the green body to reactive melt infiltration with a reactive melt comprising liquid silicon or an alloy of silicon, wherein the process neither comprises a step of hardening a binder nor a step of carbonizing the green body of the ceramic component.

2. The process of claim 1, **characterized in that** the composition in step b) further comprises one or more materials of the group consisting of silicon carbide particles, coke, and lubricants.

3. The process of claim 1, **characterized in that** the composition in step b) comprises consolidated carbon fiber bundles having a length in the range of 2 mm to 2 cm and a width in the range of 0,5 mm to 3 mm.

4. The process of claim 3, **characterized in that** the consolidated carbon fiber bundles before being used in the process are subjected to a treatment comprising impregnating the consolidated carbon fiber bundles with pitch or phenolic resin and subsequently carbonizing the impregnated consolidated carbon fiber bundles.

5. The process of claim 3 or 4, **characterized in that** the weight ratio between the expanded graphite and the consolidated carbon fiber bundles in the mixture obtained in step b) is between 0.4:1 and 1.5:1.

6. The process according to any of claims 1 to 5, **characterized in that** the mixture obtained in step b) contains 15-60 weight-% of expanded graphite, 10-50 weight-% of consolidated carbon fiber bundles, 0-45 weight-% of silicon carbide particles and 0-15 weight-% of additives comprising lubricants, release agents or mixtures thereof in relation to the total weight of the mixture.

7. The process according to any of claims 1 to 6, **characterized in that** in step c) the mixture is densified to more than 35% of the theoretical maximum density of the mixture.

8. A carbon fiber reinforced ceramic component obtained by the process of claims 1 to 7, having a thermal conductivity at 400°C in the range of 30 - 70 W/mK and having a microstructure, wherein domains of silicon carbide are present in the component which are analogue to the layer structure of densified expanded graphite.

9. The ceramic component according to claim 8, **characterized in that** the ceramic component has a density of 2.2 - 2.9 g/cm$^3$.

10. A brake disc ring comprising the ceramic component according to claim 8 or 9.

11. Use of the ceramic component according to claim 8 or 9 for brake discs, brake pads and clutches.

**Patentansprüche**

1. Verfahren zur Herstellung einer Keramikkomponente, umfassend die folgenden Schritte, in denen:

   a) expandierter Graphit und/oder ein Vorläufer von expandiertem Graphit bereitgestellt wird,
   b) eine Zusammensetzung gemischt wird, die das in Schritt a) bereitgestellte Material und ein oder mehrere Materialien aus der Gruppe bestehend aus Kohlenstofffasern und verfestigten Kohlenstofffaserbündeln umfasst, wobei bei den Letztgenannten die Kohlenstofffasern in eine Matrix aus amorphem Kohlenstoff eingebettet sind, und ein Gemisch erhalten wird, wobei die Zusammensetzung kein flüssiges Bindemittel umfasst,
   c) eine definierte Menge des in Schritt b) erhaltenen Gemischs in einer Form durch Anlegen eines Drucks von mindestens 3 MPa verdichtet wird und,
   c1) wenn ein Vorläufer von expandiertem Graphit in Schritt a) bereitgestellt wird, der das verdichtete Gemisch in der Form auf mindestens 300 °C erhitzt,
   d) ein Grünkörper der Keramikkomponente erhalten wird und
   e) der Grünkörper einer reaktiven Schmelzinfiltration mit einer reaktiven Schmelze unterzogen wird, die flüssiges Silicium oder eine Siliciumlegierung umfasst,

   wobei das Verfahren weder einen Schritt, in dem ein Bindemittel gehärtet wird, noch einen Schritt, in dem der Grünkörper der Keramikkomponente karbonisiert wird, umfasst.

2. Verfahren nach Anspruch 1, **dadurch gekennzeichnet, dass** die Zusammensetzung in Schritt b) ferner ein oder mehrere Materialien aus der Gruppe bestehend aus Siliciumcarbidpartikeln, Koks und Schmiermitteln umfasst.

3. Verfahren nach Anspruch 1, **dadurch gekennzeichnet, dass** die Zusammensetzung in Schritt b) verstärkte Kohlenstofffaserbündel mit einer Länge im Bereich von 2 mm bis 2 cm und einer Breite im Bereich von 0,5 mm bis 3 mm umfasst.

4. Verfahren nach Anspruch 3, **dadurch gekennzeichnet, dass** die verfestigten Kohlenstofffaserbündel vor der Verwendung in dem Verfahren einer Behandlung unterzogen werden, die ein Imprägnieren der verfestigten Kohlenstofffaserbündel mit Pech oder Phenolharz und anschließendes Carbonisieren der imprägnierten verfestigten Kohlefaserbündel umfasst.

5. Verfahren nach Anspruch 3 oder 4, **dadurch gekennzeichnet, dass** das Gewichtsverhältnis zwischen dem expandierten Graphit und den verfestigten Kohlenstofffaserbündeln in dem in Schritt b) erhaltenen Gemisch zwischen 0,4:1 und 1,5:1 liegt.

6. Verfahren nach einem der Ansprüche 1 bis 5, **dadurch gekennzeichnet, dass** das in Schritt b) erhaltene Gemisch 15 - 60 Gewichts-% expandierten Graphit, 10 - 50 Gewichts-% verfestigte Kohlenstofffaserbündel, 0-45 Gewichts-% Siliciumcarbidpartikel und 0 - 15 Gewichts-% Zusatzstoffe, die Schmiermittel, Trennmittel oder Gemische davon umfassen, bezogen auf das Gesamtgewicht des Gemischs enthält.

7. Verfahren nach einem der Ansprüche 1 bis 6, **dadurch gekennzeichnet, dass** in Schritt c) das Gemisch auf mehr als 35 % der theoretischen maximalen Dichte des Gemischs verdichtet wird.

8. Kohlenstofffaserverstärkte Keramikkomponente, die durch das Verfahren nach Anspruch 1 bis 7 erhalten wurde und bei 400 °C eine Wärmeleitfähigkeit im Bereich von 30 - 70 W/mK aufweist und eine Mikrostruktur aufweist, bei der Siliciumcarbiddomänen in der Komponente vorhanden sind, die analog zu der Schichtstruktur des verdichteten expandierten Graphits sind.

9. Keramikkomponente nach Anspruch 8, **dadurch gekennzeichnet, dass** die Keramikkomponente eine Dichte von 2,2 - 2,9 g/cm$^3$ aufweist.

10. Bremsscheibenring, umfassend die Keramikkomponente nach Anspruch 8 oder 9,

11. Verwendung der Keramikkomponente nach Anspruch 8 oder 9 für Bremsscheiben, Bremsbeläge und Kupplungen.

**Revendications**

1. Procédé de fabrication d'un composant en céramique comprenant les étapes suivantes :

   a) la fourniture de graphite expansé et/ou d'un précurseur de graphite expansé,
   b) le mélange d'une composition comprenant le matériau fourni à l'étape a) et un ou plusieurs matériaux du groupe constitué de fibres de carbone et de faisceaux de fibre de carbone consolidés dans lequel dans ces derniers, les fibres de carbone sont incorporées dans une matrice de carbone amorphe et l'on obtient un mélange, dans lequel la composition ne comprend pas de liant liquide,
   c) la densification d'une quantité définie du mélange obtenu à l'étape b) dans un moule en appliquant une pression d'au moins 3 MPa et,
   c1) si un précurseur de graphite expansé est fourni à l'étape a), le réchauffage du mélange densifié dans le moule jusqu'à au moins 300 °C,
   d) l'obtention d'une ébauche crue du composant en céramique et
   e) le fait de soumettre l'ébauche crue à une infiltration de bain fondu réactif avec un bain fondu réactif comprenant du silicium liquide ou un alliage de silicium,

   dans lequel le procédé ne comprend ni une étape de durcissement d'un liant ni une étape de carbonisation de l'ébauche crue du composant en céramique.

2. Procédé selon la revendication 1, **caractérisé en ce que** la composition à l'étape b) comprend en outre un ou plusieurs matériaux du groupe constitué de particules de carbure de silicium, de coke et de lubrifiants,

3. Procédé selon la revendication 1, **caractérisé en ce que** la composition à l'étape b) comprend des faisceaux de fibre de carbone consolidés ayant une longueur dans la plage de 2 mm à 2 cm et une largeur dans la plage de 0,5 mm à 3 mm.

4. Procédé selon la revendication 3, **caractérisé en ce que** les faisceaux de fibre de carbone consolidés avant d'être utilisés dans le procédé sont soumis à un traitement comprenant l'imprégnation des faisceaux de fibre de carbone consolidés avec de la poix ou une résine phénolique et ensuite la carbonisation des faisceaux de fibre de carbone consolidés imprégnés.

5. Procédé selon la revendication 3 ou 4, **caractérisé en ce que** le rapport en poids entre le graphite expansé et les faisceaux de fibre de carbone consolidés dans le mélange obtenu à l'étape b) est entre 0,4:1 et 1,5:1.

6. Procédé selon l'une quelconque des revendications 1 à 5, **caractérisé en ce que** le mélange obtenu à l'étape b) contient de 15 à 60 % en poids de graphite expansé, de 10 à 50 % en poids de faisceaux de fibre de carbone consolidés, de 0 à 45 % en poids de particules de carbure de silicium et de 0 à 15 % en poids d'additifs comprenant des lubrifiants, des agents de démoulage ou des mélanges de ceux-ci par rapport au poids total du mélange.

**7.** Procédé selon l'une quelconque des revendications 1 à 6, **caractérisé en ce qu'**à l'étape c) le mélange est densifié à plus de 35 % de la masse volumique maximale théorique du mélange.

**8.** Composant en céramique renforcé de fibre de carbone obtenu par le procédé des revendications 1 à 7, ayant une conductivité thermique à 400 °C dans la plage de 30 à 70 W/mK et ayant une microstructure, dans lequel des domaines de carbure de silicium sont présents dans le composant qui sont analogues à la structure en couche de graphite expansé densifié,

**9.** Composant en céramique selon la revendication 8, **caractérisé en ce que** le composant en céramique a une masse volumique de 2,2 à 2,9 g/cm$^3$.

**10.** Anneau de disque de frein comprenant le composant en céramique selon la revendication 8 ou 9.

**11.** Utilisation du composant en céramique selon la revendication 8 ou 9 pour des disques de frein, des plaquettes de frein et des embrayages.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001199767 A
- US 6261981 B1
- DE 10242566

### Non-patent literature cited in the description

- **M. INAGAKI et al.** Advanced Materials Science and Engineering of Carbon. Elsevier, 2014, 314-315
- **M. INAGAKI et al.** Materials Science and Engineering of Carbon: Fundamentals. Elsevier, 2014, 280-281